# EUROPÄISCHE PATENTSCHRIFT

(11) **EP 3 279 410 B1**
(45) Veröffentlichungstag und Bekanntmachung des Hinweises auf die Patenterteilung: **01.01.2020**
(21) Anmeldenummer: 17161445.6
(22) Anmeldetag: 16.03.2017
(51) Int. Cl.: E04H 15/20

(54) **SCHUTZVORRICHTUNG, INSBESONDERE ZELT ODER MARKISE**
PROTECTION DEVICE, IN PARTICULAR TENT OR AWNING
DISPOSITIF DE PROTECTION, EN PARTICULIER TENTE OU MARQUISE

(30) Priorität: 04.08.2016 DE 202016104291 U
(43) Veröffentlichungstag der Anmeldung: 07.02.2018
(73) Patentinhaber: Westfield Outdoors GmbH, 47807 Krefeld (DE)
(72) Erfinder: DREES, Uwe, TA7 9HP Catcott (GB); YANG, Baoqing, 310015 Hangzhou City (CN)
(74) Vertreter: Reiser & Partner Patentanwälte mbB

(56) Entgegenhaltungen:
- DE-U1-202007 000 758
- DE-U1-202016 101 349
- FR-A1- 2 341 017
- US-A1- 2014 077 110

## Beschreibung

Die vorliegende Erfindung betrifft eine Schutzvorrichtung mit einer Membran und einer Stützvorrichtung für die Membran, wobei die Stützvorrichtung ein aufblasbares erstes Stützelement mit einer flexiblen Wandung, welche eine erste Druckkammer bildet, umfasst, wobei das erste Stützelement einen ersten Verbindungsanschluss mit einer ersten Verbindungsöffnung aufweist, wobei die Stützvorrichtung ein aufblasbares zweites Stützelement mit einer flexiblen Wandung, welche eine zweite Druckkammer bildet, aufweist, wobei das zweite Stützelement einen zweiten Verbindungsanschluss mit einer zweiten Verbindungsöffnung aufweist, wobei eine Verbindungsvorrichtung zur Verbindung des ersten Verbindungsanschlusses mit dem zweiten Verbindungsanschluss vorgesehen ist, wobei die Verbindungsvorrichtung ein erstes Verbindungsteil zur Verbindung mit dem ersten Verbindungsanschluss und ein zweites Verbindungsteil zur Verbindung mit dem zweiten Verbindungsanschluss aufweist.

Als Zelte ausgebildete Schutzvorrichtungen mit einer Zeltbahn als Membran und einer Stützvorrichtung sind bekannt. Gängig ist dabei, dass die Stützvorrichtung durch flexible oder starre Stangen gebildet wird, um die Zeltbahn aufzuspannen. Der Aufbau solcher Zelte ist jedoch recht aufwendig. Die DE 11 2012 002 152 T5 beschreibt ein solches Zelt.

Weiterhin ist bereits vorgeschlagen worden, Schutzvorrichtungen mit Stützvorrichtungen zu verwenden, die aufblasbare Stützelemente aufweisen. Die DE 20 2014 100 322 U1 beschreibt insoweit ein Zelt mit einem kreuzartig verbundenen Zeltgestänge mit aufblasbaren Luftrohren. Ein weiteres Zelt mit aufblasbaren Kammern ist in der CN202645123U beschrieben. Nachteilig ist hierbei, dass die Handhabung immer noch nicht optimal ist.

Die DE 20 2016 101 349 U1 beschreibt eine weitere Schutzvorrichtung mit aufblasbaren Stützelementen, die mit Verbindungsvorrichtungen verbunden sind.

Die FR 2 341 017 A1 beschreibt eine Stützvorrichtung mit aufblasbaren Stützelementen, die Verbindungsanschlüsse aufweisen und durch einen Verbinder miteinander verbunden werden können. Der Verbinder ist dabei mit einem Ventil versehen.

Die Erfindung stellt sich die Aufgabe, eine Schutzvorrichtung anzugeben, die besonders einfach und zuverlässig zu handhaben ist und kostengünstig hergestellt werden kann.

Diese Aufgabe wird mit den Merkmalen von Anspruch 1 gelöst. Demnach ist bei einer eingangs genannten Schutzvorrichtung vorgesehen, dass Mittel vorgesehen sind, um das erste und zweite Verbindungsteil lösbar miteinander zu verbinden. Auf diese Weise wird eine besonders einfache Bedienung erreicht. Die zweiteilige Gestaltung der Verbindungsvorrichtung kann besonders einfach gehandhabt werden und ermöglicht, eine lösbare Verbindung zwischen den Stützelementen herzustellen. Daher müssen jeweils nur relativ kleine und leichte Komponenten transportiert werden. Insbesondere ermöglicht diese Gestaltung, dass zunächst das erste Verbindungsteil mit dem ersten Stützelement und das zweite Verbindungsteil mit dem zweiten Stützelement verbunden wird und anschließend das erste und das zweite Verbindungsteil miteinander verbunden werden. Dies ist insbesondere dann von Vorteil, wenn das erste und das zweite Verbindungsteil durch eine Schraubverbindung mit dem ersten bzw. zweiten Stützelement verbunden werden. Die Mittel können dabei insbesondere ein wiederholtes Verbinden und Trennen der ersten und zweiten Verbindungsteile ermöglichen und damit den Auf- und Abbau der Stützvorrichtung erleichtern. Zu einer leichten Bedienbarkeit trägt bei, wenn die Mittel handbetätigt sind. Die Schutzvorrichtung kann insbesondere als Zelt ausgebildet sein, wobei die Membran als eine Zeltbahn ausgebildet sein kann. Das Zelt kann dabei z.B. als freistehendes Zelt oder als Vorzelt, z.B. für einen Wohnwagen, ein Wohnmobil oder einen Eingang, ausgebildet sein. Das Zelt kann auch als Partyzelt ausgebildet sein. Mit der beschriebenen Gestaltung kann z.B. ein Zelt mit unterschiedlichen Längen erstellt werden. Hierfür wird die erforderliche Anzahl an Stützelementen miteinander an den Verbindungsanschlüssen verbunden und aufgepumpt. Darüber hinaus kann die Schutzvorrichtung z.B. als Markise ausgebildet sein. Bei einer Markise kann die Membran als Markisenbahn ausgebildet sein.

Erfindungsgemäß ist vorgesehen, dass die Verbindungsvorrichtung ein Ventil aufweist, das die erste Verbindungsöffnung absperrt. Dabei weist das Ventil einen beweglichen Ventilkörper und einen Ventilsitz auf sowie eine Feder welche den Ventilkörper gegen den Ventilsitz drückt. Der Ventilsitz kann insbesondere in dem ersten Verbindungsteil angeordnet sein. Vorzugsweise ist die Feder als Schraubendruckfeder ausgebildet. Der Ventilsitz kann insbesondere ringförmig ausgebildet sein.

Eine weitere Verbesserung sieht vor, dass der Ventilkörper einen Halteabschnitt für die Feder aufweist. Vorzugsweise weist der Halteabschnitt Rippen auf, welche an einer Innenseite der Feder anliegen.

In bevorzugter Weise kann vorgesehen sein, dass der bewegliche Ventilkörper ein Dichtelement zur Anlage an dem Ventilsitz aufweist. Vorzugsweise ist das Dichtelement ein separates Dichtelement. Das separate Dichtelement kann insbesondere ringförmig ausgebildet sein. Der Ventilkörper kann insbesondere eine nutförmige Aufnahme für das Dichtelement aufweisen. Der bewegliche Dichtkörper kann zwischen einer offenen und einer geschlossenen Stellung, in der der Ventilkörper am Ventilsitz anliegt, bewegt werden.

Eine bevorzugte Ausgestaltung sieht vor, dass der Ventilkörper eine Anlage für die Feder aufweist. Die Anlage kann durch einen Haltekörper gebildet sein. Der Haltekörper kann durch Befestigungsmittel, wie z. B. eine Schraube, mit dem übrigen Ventilkörper verbunden sein.

Eine vorteilhafte Ausgestaltung sieht vor, dass das Ventil Klemmmittel aufweist, um den Ventilkörper in der offenen Stellung zu fixieren. Auf diese Weise kann das Ventil entgegen der Federkraft in einer offenen Stellung gehalten werden. Die Klemmmittel können Vorsprünge umfassen, die an der Innenseite des unten näher beschriebenen Stutzens angeordnet sind. Dabei kann der Ventilkörper, z.B. durch Drehen, zwischen einer Position, in der die Klemmmittel den Ventilkörper fixieren, und einer Position, in der die Klemmmittel den Ventilkörper nicht fixieren, bewegt werden.

Eine weitere Verbesserung sieht vor, dass das erste Verbindungsteil einen Stutzen aufweist, in dem der Ventilkörper angeordnet ist. Vorzugsweise wird das erste Verbindungsteil über den Stutzen mit dem ersten Verbindungsanschluss verbunden. In besonders bevorzugter Weise sind an der Außenseite des Stutzens Verbindungsmittel ausgebildet. Die Verbindungsmittel können insbesondere ein Gewinde umfassen. Dieses kann insbesondere als Außengewinde ausgebildet sein. Der Stutzen kann eine Durchgangsbohrung aufweisen.

Vorzugsweise ist vorgesehen, dass in dem Stutzen ein Anschlag für die Feder angeordnet ist. Der Anschlag kann insbesondere durch einen nach innen weisenden Vorsprung gebildet sein. An der gegenüberliegenden Seite des Vorsprungs kann der Ventilsitz ausgebildet sein.

Weiterhin ist bevorzugt, dass das erste Verbindungsteil einen Grundkörper aufweist. Insbesondere kann an dem Grundkörper der Stutzen angeordnet sein. Vorzugsweise hat der Grundkörper einen größeren Außendurchmesser als der Stutzen. Vorzugsweise liegt der Außendurchmesser des Grundkörpers zwischen dem 1,5 fachen und dem 3-fachen des Außendurchmessers des Stutzens.

Eine vorteilhafte Gestaltung sieht vor, dass an dem Grundkörper Verbindungsmittel zur Verbindung mit einem zweiten Verbindungsteil oder einer Abdeckung vorgesehen sind. Diese Verbindungsmittel können ein Gewinde und vorzugsweise ein Außengewinde umfassen.

Eine vorteilhafte Ausgestaltung sieht vor, dass eine Abdeckung vorgesehen ist, welche auf das erste Verbindungsteil aufgesetzt ist. Auf diese Weise kann das erste Verbindungsteil auch verwendet werden, wenn es nicht mit einem zweiten Verbindungsteil verbunden ist. Das Ventil verschließt dabei den ersten Verbindungsanschluss. Durch die Abdeckung kann das Ventil gegen Verschmutzung geschützt werden. Zusätzlich kann die Dichtwirkung durch die Abdeckung verbessert werden.

In vorteilhafter Weise kann vorgesehen sein, dass das zweite Verbindungsteil einen Stutzen aufweist. Vorzugsweise sind an der Außenseite des Stutzens Verbindungsmittel ausgebildet. Die Verbindungsmittel können insbesondere ein Gewinde umfassen. Dieses kann insbesondere als Außengewinde ausgebildet sein. Der Stutzen kann eine Durchgangsbohrung aufweisen.

Weiterhin kann vorgesehen sein, dass das zweite Verbindungsteil einen Grundkörper aufweist. Insbesondere kann an dem Grundkörper der Stutzen angeordnet sein. Vorzugsweise hat der Grundkörper einen größeren Außendurchmesser als der Stutzen. Vorzugsweise liegt der Außendurchmesser des Grundkörpers zwischen dem 1,5 fachen und dem 3-fachen des Durchmessers des Stutzens. An dem Grundkörper können Verbindungsmittel zur Verbindung mit dem ersten Verbindungsteil vorgesehen sein. Diese Verbindungsmittel können ein Gewinde und insbesondere eine Mutter umfassen, welche mit dem Außengewinde des Grundkörpers des ersten Verbindungsteils verschraubt werden kann.

Erfindungsgemäß ist vorgesehen, dass das zweite Verbindungsteil ein Betätigungselement aufweist, welches so angeordnet ist, dass es den Ventilkörper aus einer geschlossenen Stellung in eine geöffnete Stellung bewegt, wenn das zweite Verbindungsteil an dem ersten Verbindungsteil angeschlossen ist. Auf diese Weise kann das Ventil in der geöffneten Stellung gehalten werden. Dies ermöglicht unter anderem, dass die erste und die zweite Druckkammer miteinander verbunden werden und damit gleichzeitig aufgeblasen werden können. Damit kann die Stützvorrichtung von einem Anschluss aus aufgeblasen werden. Ein separates Aufblasen der einzelnen Stützelemente ist nicht erforderlich. Vorzugsweise weist das Betätigungselement einen Betätigungsnocken auf, der an dem Grundkörper ausgebildet ist. Insbesondere kann der Betätigungsnocken vorstehend ausgebildet sein.

Vorzugsweise weist die Stützvorrichtung weitere entsprechend ausgebildete Stützelemente auf, wobei jeweils zwei Stützelemente mit einer weiteren Verbindungsvorrichtung verbunden werden. Auf diese Weise kann die Stützvorrichtung modulartig aus einer beliebigen Anzahl an Stützelementen zusammengesetzt werden. Gleichzeitig bleibt die Handhabung einfach, da mehrere der über Verbindungsvorrichtungen verbundenen Stützelemente gleichzeitig über einen einzigen Anschluss aufgepumpt werden können.

Erfindungsgemäß kann eine erste Dichtung vorgesehen sein, welche das erste Verbindungsteil gegenüber dem ersten Verbindungsanschluss abdichtet. Vorzugsweise weist das erste Verbindungsteil eine nutförmige Aufnahme auf, in der die Dichtung angeordnet ist. Vorzugsweise ist die Dichtung ringförmig. Insbesondere kann die Dichtung in einem an den Stutzen anschließenden Bereich des Grundkörpers angeordnet sein.

Eine bevorzugte Ausgestaltung sieht vor, dass eine zweite Dichtung vorgesehen ist, welche das zweite Verbindungsteil gegenüber dem zweiten Verbindungsanschluss abdichtet. Vorzugsweise weist das zweite Verbindungsteil eine nutförmige Aufnahme auf, in der die Dichtung angeordnet ist. Vorzugsweise ist die Dichtung ringförmig. Insbesondere kann die Dichtung in einem an den Stutzen anschließenden Bereich des Grundkörpers angeordnet sein.

Weiterhin kann vorgesehen sein, dass eine dritte Dichtung vorgesehen ist, welche den Grundkörper des ersten Verbindungsteils gegenüber dem Grundkörper des zweiten Verbindungsteils abdichtet. Die Dichtung kann insbesondere in einer Nut angeordnet und ringförmig ausgebildet sein. Vorzugsweise ist die Dichtung in einer Nut des zweiten Verbindungsteils angeordnet.

Erfindungsgemäß ist bevorzugt, dass das erste Stützelement und/oder das zweite Stützelement jeweils ein Anschlusselement aufweist, welches den ersten bzw. zweiten Verbindungsanschluss bildet. Vorzugsweise hat das Anschlusselement einen Flansch zur Verbindung mit der flexiblen Wandung.

Weiterhin kann vorgesehen sein, dass das Anschlusselement eine Aufnahme für den Stutzen des ersten bzw. zweiten Verbindungsteils aufweist. Die Aufnahme kann zylindrisch ausgebildet sein. Vorzugsweise weist die Aufnahme ein Innengewinde auf, in das der Stutzen eingeschraubt werden kann.

Vorteilhafter Weise kann vorgesehen sein, dass das Anschlusselement einen Einsatz aufweist, der erste die Verbindungsöffnung bildet. Besonders bevorzugt ist der Einsatz aus einem härteren Material als der Flansch. In dem Einsatz kann das Innengewinde ausgebildet sein, in das der Stutzen des ersten bzw. zweiten Verbindungsteils eingeschraubt werden kann.

Weitere Ziele, Merkmale, Vorteile und Anwendungsmöglichkeiten der vorliegenden Erfindung ergeben sich aus der nachfolgenden Beschreibung eines Ausführungsbeispiels anhand der Zeichnungen. Dabei bilden alle beschriebenen und/oder bildlich dargestellten Merkmale für sich oder in beliebiger sinnvoller Kombination den Gegenstand der Erfindung, auch unabhängig von der Zusammenfassung in einzelnen Ansprüchen oder deren Rückbeziehungen.

Es zeigen:
- Fig. 1:: Eine erfindungsgemäße Stützvorrichtung für eine Schutzvorrichtung mit einer Verbindungsvorrichtung;

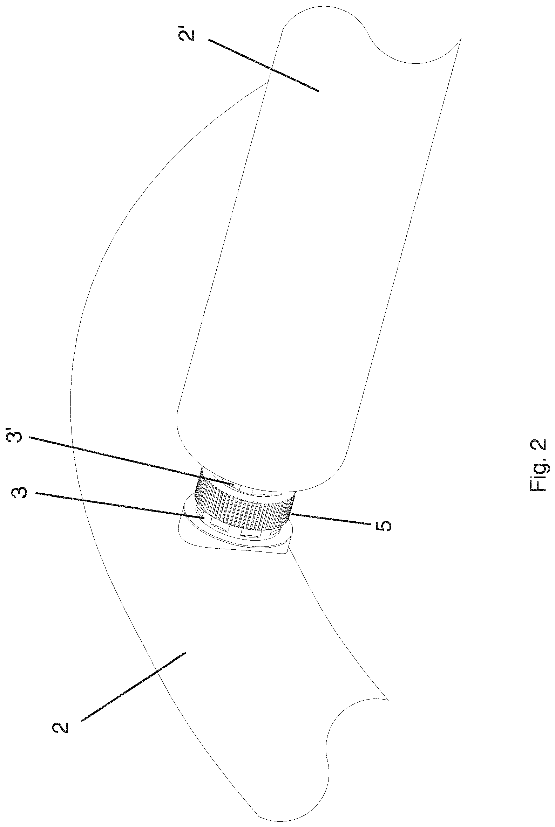

- Fig. 2:: Einen vergrößerten Ausschnitt aus Fig. 1;
- Fig. 3a:: Die Verbindungsvorrichtung aus Fig. 1 umfassend ein erstes und ein zweites Verbindungsteil sowie die zugehörigen Anschlusselemente;
- Fig. 3b:: Eine Explosionsdarstellung des ersten Verbindungsteils aus Fig. 3a;
- Fig. 3c:: Eine Explosionsdarstellung des zweiten Verbindungsteils aus Fig. 3a;
- Fig. 4a - 4d:: Die Verbindungsvorrichtung aus Fig. 3a mit dem ersten Verbindungsteil, welches mit dem zweiten Verbindungsteil verbunden ist, in einer Seitenansicht, in perspektivischer Darstellung, im Längsschnitt und in Draufsicht;
- Fig. 5a - 5c:: Die Anschlusselemente für das erste und zweite Verbindungsteil aus Fig. 3a in Seitenansicht, perspektivischer Darstellung und Draufsicht;
- Fig. 6a - 6d:: Einen Einsatz des Anschlusselements aus Fig. 5a in Draufsicht, Längsschnitt, Seitenansicht und perspektivischer Darstellung;
- Fig. 7a - 7d:: Ein Klemmelement für das Anschlusselement aus Fig. 5a in Draufsicht, Längsschnitt, Seitenansicht und perspektivischer Darstellung;
- Fig. 8a - 8c:: Die Dichtung des ersten bzw. zweiten Verbindungsteils aus Fig. 3a in Draufsicht, Seitenansicht, und perspektivischer Darstellung;
- Fig. 9a - 9d:: Den Grundkörper des zweiten Verbindungsteils aus Fig. 3a in Seitenansicht, Draufsicht von oben, Draufsicht von unten und in perspektivischer Darstellung;
- Fig. 10a - 10e:: Die Mutter aus Fig. 3a in Längsschnitt, Seitenansicht, perspektivischer Darstellung, Draufsicht von oben und Draufsicht von unten;
- Fig. 11a - 11d:: Den Grundkörper des ersten Verbindungsteils aus Fig. 3a in Seitenansicht, Draufsicht von oben, Draufsicht von unten und in perspektivischer Darstellung;
- Fig. 12a - 12c:: Den Haltekörper in Draufsicht, Seitenansicht und in perspektivischer Darstellung;
- Fig. 13a - 13c:: Die Feder des Ventils aus Fig. 3a in perspektivischer Darstellung, Seitenansicht und Draufsicht;
- Fig. 14a - 14c:: Das Dichtelement aus Fig. 3b in Draufsicht, Seitenansicht und perspektivischer Darstellung;
- Fig. 15a - 15c:: Der Ventilkörper aus Fig. 3b in Draufsicht, perspektivischer Darstellung und Seitenansicht;

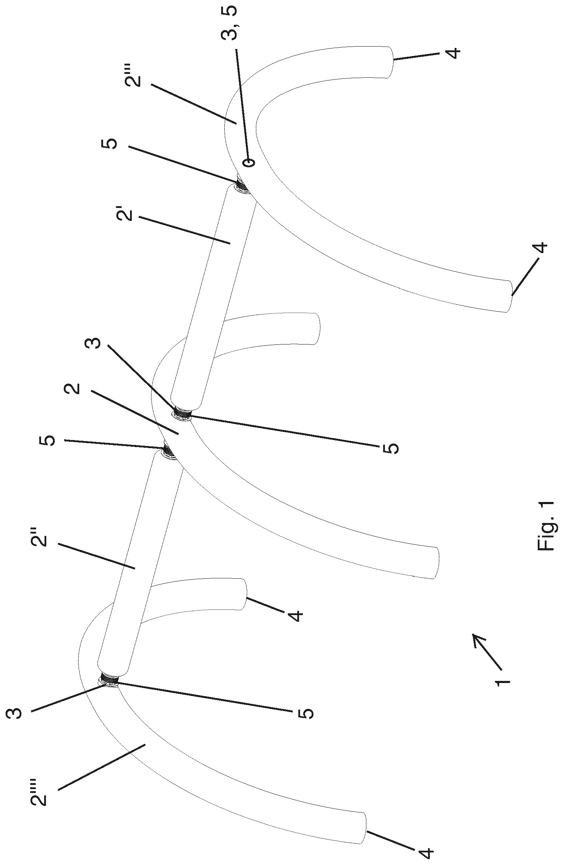

Figur 1 zeigt eine Stützvorrichtung 1 für eine Schutzvorrichtung. Dargestellt ist eine Stützvorrichtung 1 für eine als ein Zelt ausgebildete Schutzvorrichtung. Die Schutzvorrichtung umfasst darüber hinaus eine nicht dargestellte Membran, die an der Stützvorrichtung befestigt werden kann. Vorzugsweise wird die Membran auf die Stützvorrichtung 1 aufgelegt. Alternativ ist es möglich, die Membran unter der Stützvorrichtung 1 zu befestigen. Die Membran kann die Stützvorrichtung ganz oder teilweise überdecken. Die Membran kann insbesondere mit Öffnungen versehen sein, die zum Beispiel ein Betreten ermöglichen. Die Membran kann die Stützvorrichtung ganz oder teilweise abdecken. Die Membran kann insbesondere als eine Zeltbahn ausgebildet sein.

Die Stützvorrichtung 1 weist mehrere aufblasbare Stützelemente auf. Das erste Stützelement 2 weist dabei eine erste Druckkammer auf. Dies gilt ebenfalls für das zweite Stützelement 2' und die weiteren Stützelemente 2", 2"' und 2"". Die Stützelemente 2, 2', 2", 2'" und 2"" sind jeweils als aufblasbare Schläuche ausgebildet. Sie weisen eine luftdichte flexible Wandung auf. Die Schläuche können durch Zufuhr eines Gases unter Druck, insbesondere Luft, aufgepumpt werden. Die luftdichte Wandung der Schläuche ist dabei derart flexibel, dass die Stützelemente in nicht aufgeblasenem Zustand zusammengefaltet und dementsprechend klein verpackt werden können.

Das erste Stützelement 2 weist einen ersten Verbindungsanschluss 3 auf. Das zweite Stützelement 2' weist einen zweiten Verbindungsanschluss 3' auf. Über die Verbindungsanschlüsse 3, 3' kann das erste Stützelement 2 an das zweite Stützelement 2' angeschlossen werden, sodass die erste und die zweite Druckkammer über die Verbindungsöffnungen miteinander strömungsverbunden sind. Auf diese Weise können das erste Stützelement 2 und das zweite Stützelement 2' zusammen aufgepumpt werden. Es ist daher nicht erforderlich, die Stützelemente einzeln aufzublasen.

In den Figuren ist eine Ausführungsform dargestellt, bei der das erste Stützelement 2 mehrere Verbindungsanschlüsse 3 aufweist. Diese sind im Ausführungsbeispiel auf den gegenüberliegenden Seiten des Stützelements 2 angeordnet. Auf diese Weise können auf der einen Seite das zweite Stützelement 2' und auf der gegenüberliegenden Seite das dritte Stützelement 2" angeordnet und beide an das Stützelement 2 strömungsverbunden angeschlossen werden. Das zweite Stützelement 2' ist über einen weiteren Verbindungsanschluss mit dem Stützelement 2"' verbunden. Das Stützelement 2" ist über einen Verbindungsanschluss mit dem Stützelement 2"" verbunden. Auf diese Weise kann die Stützvorrichtung 1 modular aus einer gewünschten Anzahl von Stützelementen zusammengesetzt werden. Die Ausgestaltung der verbundenen Verbindungsanschlüsse ermöglicht dabei, die Druckkammern aller Stützelemente zusammen aufzupumpen.

Figur 1 zeigt weiterhin, dass die Stützelemente 2, 2"' und 2"" bogenförmig ausgebildet sind. Wie dargestellt ist der Bogen nach unten geöffnet. Die Stützelemente 2, 2"' und 2"" weisen jeweils zwei Auflageflächen 4 für Auflager am Untergrund auf. Die Stützelemente 2' und 2" sind gerade ausgebildet und verbinden jeweils zwei nebeneinander angeordnete bogenförmige Stützelemente 2, 2'" und 2"".

Die Verbindungsanschlüsse 3 sind bei dem dargestellten Ausführungsbeispiel, wie Figur 1 ebenfalls zeigt, jeweils in einem oberen Bereich der Stützelemente angeordnet.

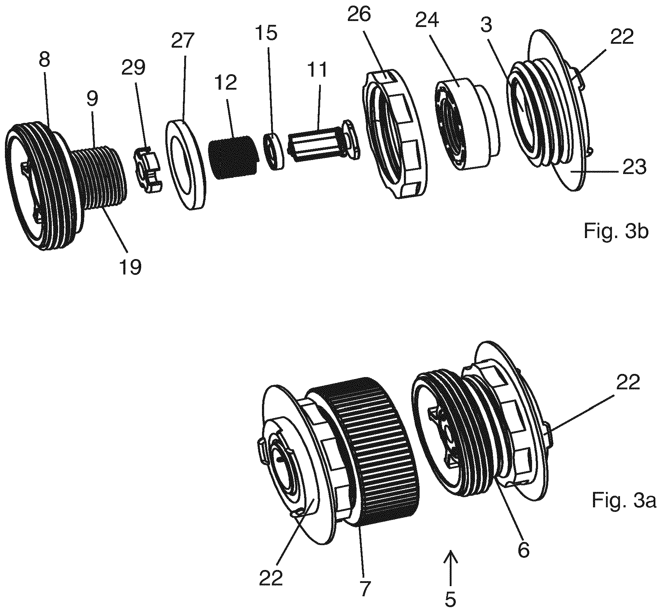

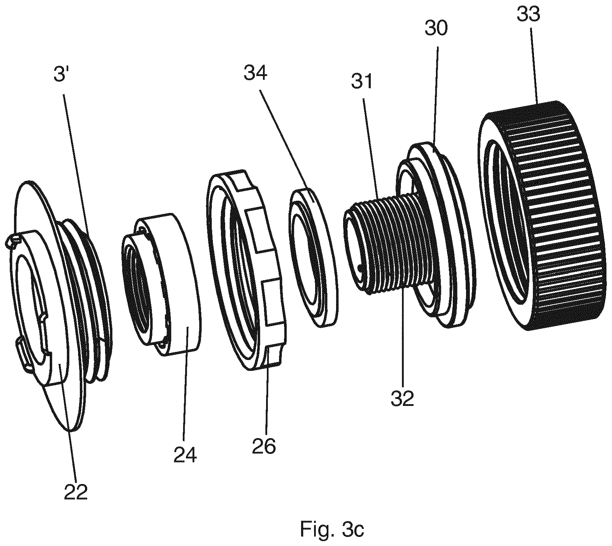

Figur 1 lässt weiterhin erkennen, dass das erste Stützelement 2 und das zweite Stützelement 2' durch eine Verbindungsvorrichtung 5 miteinander verbunden sind. Auch die weiteren Stützelemente sind durch identisch ausgebildete Verbindungsvorrichtungen 5 miteinander verbunden. Die Verbindungsvorrichtung 5 ist in Figur 3a genauer dargestellt. Hier ist gut zu erkennen, dass die Verbindungsvorrichtung 5 ein erstes Verbindungsteil 6 und ein zweites Verbindungsteil 7 aufweist. In Figur 3a ist das erste Verbindungsteil 6 von dem zweiten Verbindungsteil 7 gelöst. Die Figuren 3b und 3c zeigen als Explosionsdarstellungen die Komponenten des ersten Verbindungsteils 6 und des zweiten Verbindungsteils 7.

Das erste Verbindungsteil 6 weist einen Grundkörper 8 auf. Der Grundkörper hat eine im Wesentlichen zylindrische Form. An dem Grundkörper 8 ist ein Stutzen 9 angeordnet. Wie dargestellt, hat der Grundkörper 8 einen größeren Außendurchmesser als der Stutzen 9.

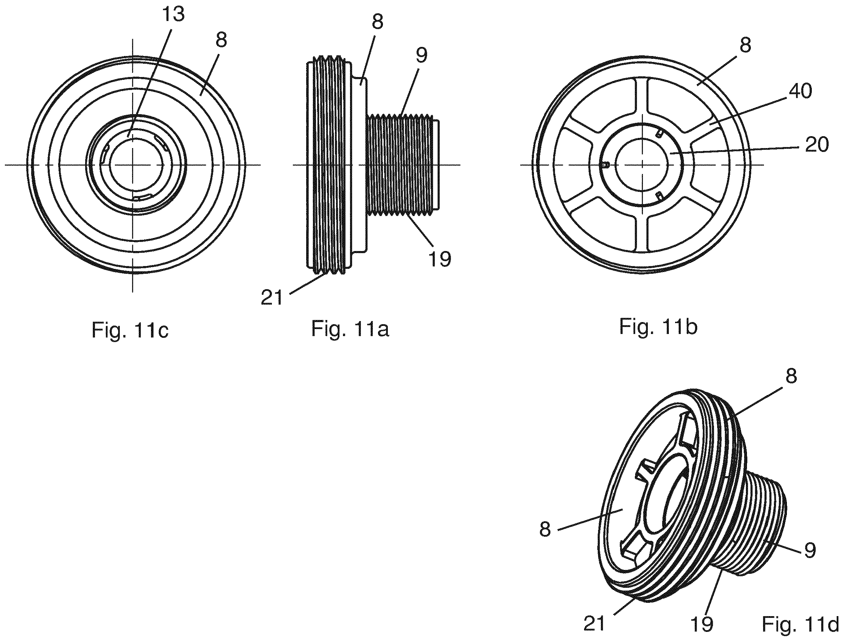

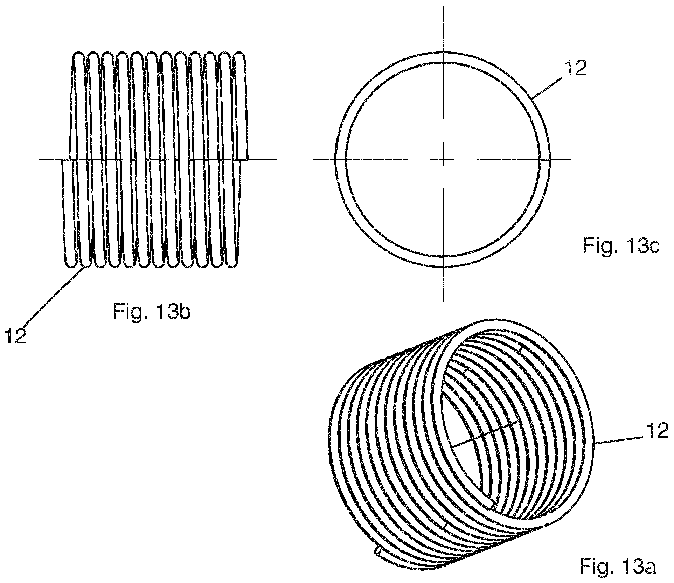

Das erste Verbindungsteil 6 weist ein Ventil 10 auf. Das Ventil 10 umfasst dabei einen beweglichen Ventilkörper 11 und eine Feder 12. Das Ventil 10 ist in dem Stutzen 9 angeordnet. Es umfasst einen Ventilsitz 13, der in dem ersten Verbindungsteil 6 angeordnet ist. Dies ist auch in den Figuren 11a - d zu erkennen, welche den Grundkörper 8 darstellen. Die Feder 12, welche als Schrauben-Druckfeder ausgebildet ist, ist zudem in den Figuren 13a - c näher dargestellt.

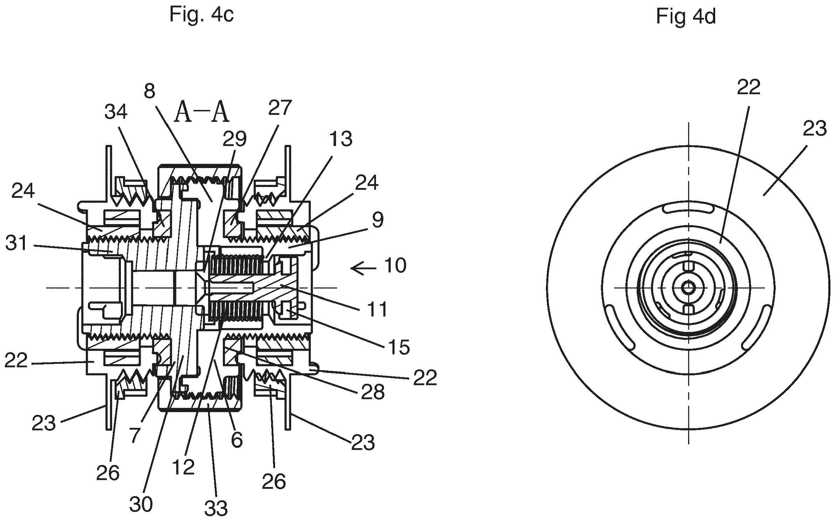

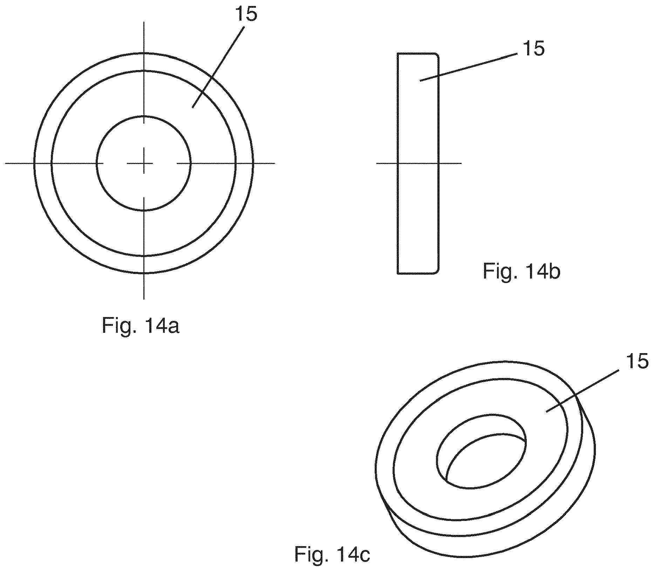

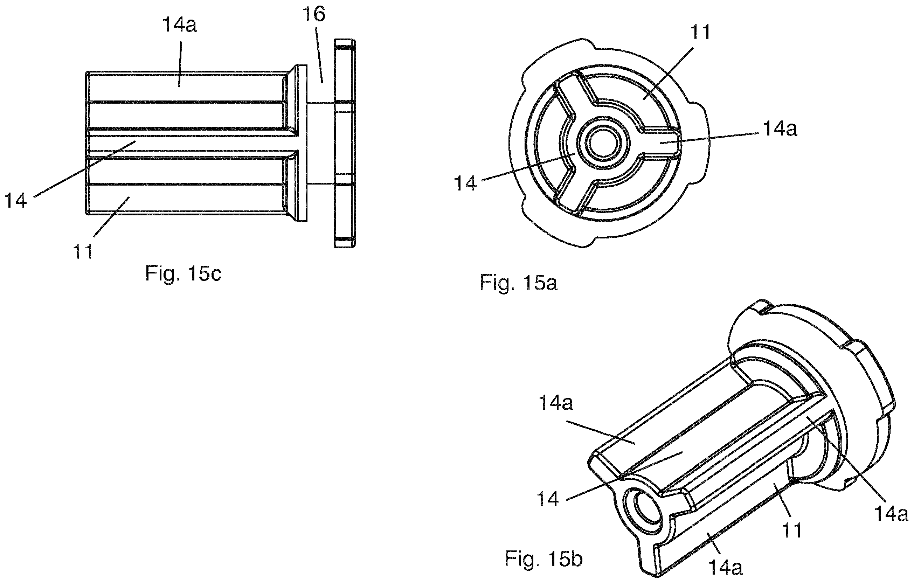

Der Ventilkörper 11 ist in den Figuren 15a - c genauer dargestellt. Gut zu erkennen ist hier der Halteabschnitt 14 für die Feder, welcher drei Rippen 14a aufweist, die an einer Innenseite der Feder anliegen. Der Ventilkörper 11 weist darüber hinaus ein separates Dichtelement 15 auf, das in den Figuren 14a-c im Einzelnen dargestellt ist. Das Dichtelement 15 ist ringförmig ausgebildet. Der Ventilkörper 11 weist eine nutförmige Aufnahme 16 für das Dichtelement 15 auf. Der zusammengebaute Zustand ist auch gut in Figur 4c zu erkennen.

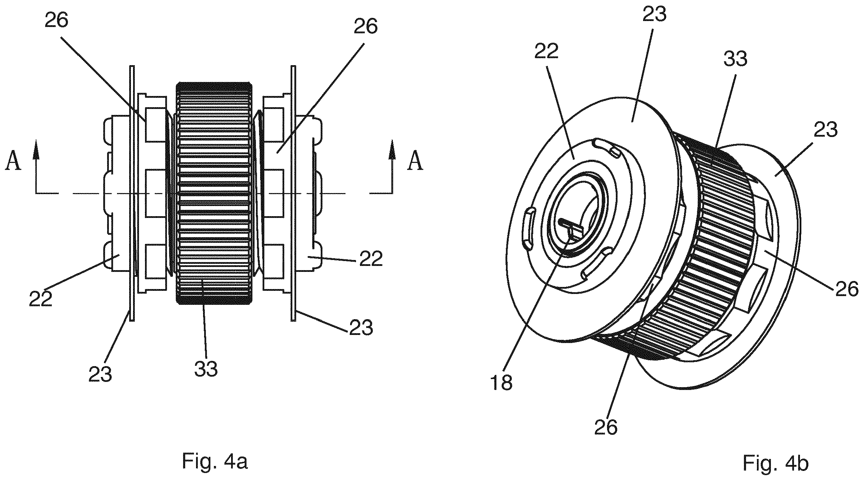

Das Ventil 10 kann darüber hinaus Klemmmittel 18 aufweisen, um den Ventilkörper in der offenen Stellung zu fixieren. Die Klemmmittel 18 umfassen Vorsprünge nach Art eines Bajonettverschlusses, die an der Innenseite des Stutzens 9 ausgebildet sind. Dies ist beispielsweise in Figur 4b gut zu erkennen. Der Ventilkörper 11 kann dabei zwischen einer Stellung, in der der Ventilkörper 11 frei ist und einer Stellung, in der der Ventilkörper 11 fixiert ist bewegt werden.

Der Ventilkörper 11 wird durch die Feder 12 zu dem Ventilsitz 13 hin gedrückt, sodass das Ventil 10, solange dieses nicht betätigt wird, selbsttätig geschlossen gehalten wird.

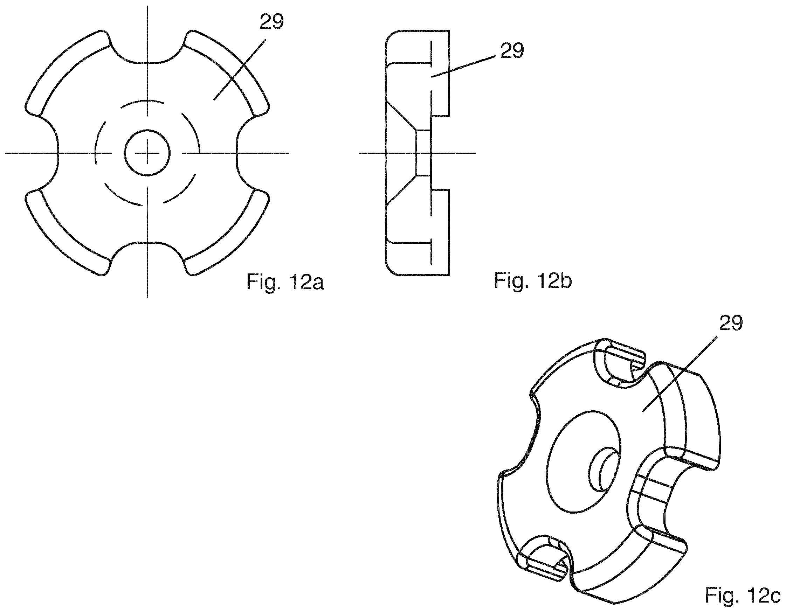

Das Ventil 10 umfasst darüber hinaus einen Haltekörper 29, der eine Anlage für die Feder bildet. Der Haltekörper ist in den Figuren 12a - c näher dargestellt. Er kann über eine Schraube mit dem Ventilkörper 11 verbunden werden (vgl. Fig. 4c).

An dem Stutzen 9 sind an der Außenseite Verbindungmittel 19 vorgesehen, die ein Gewinde umfassen. Weiterhin kann in dem Stutzen ein Anschlag 20 für die Feder 12 ausgebildet sein.

Der Grundkörper 8 weist Verbindungsmittel 21 auf, die im dargestellten Ausführungsbeispiel ein Außengewinde umfassen.

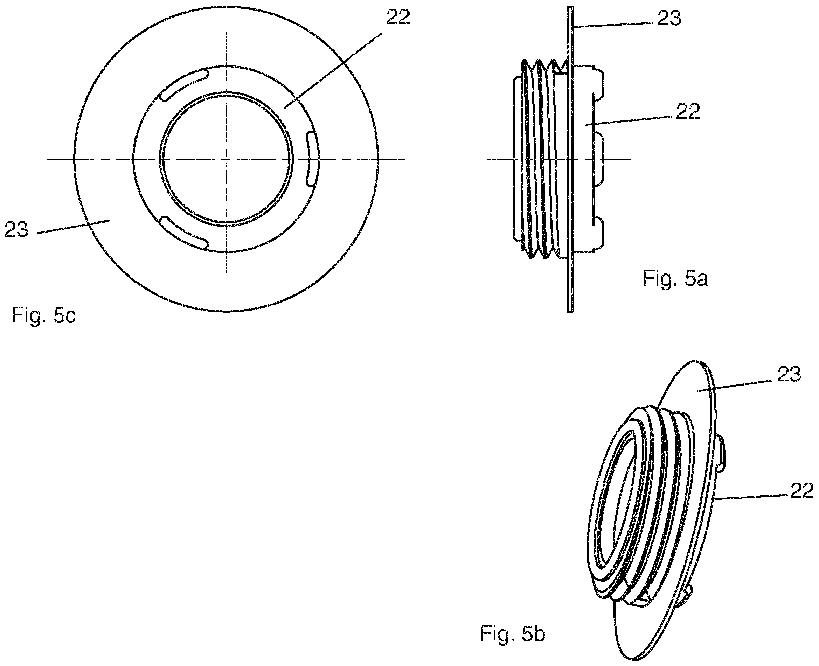

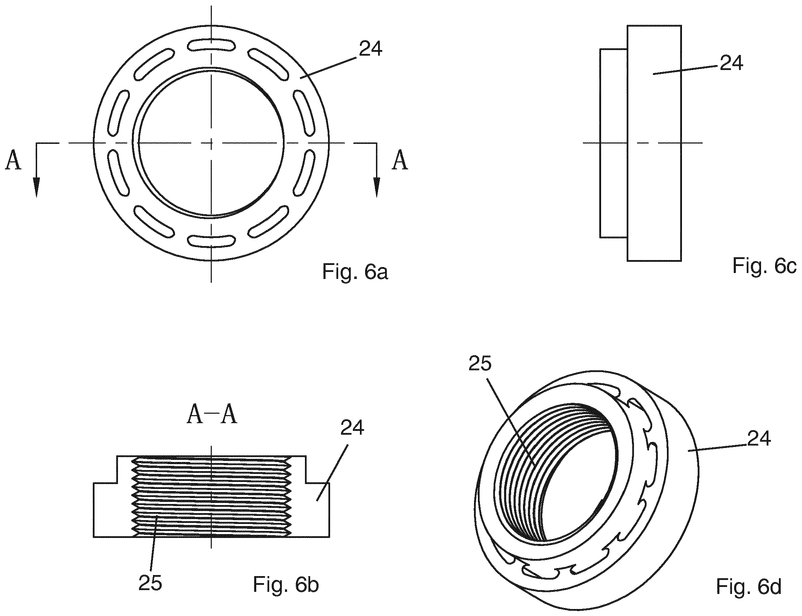

Figur 3b zeigt weiterhin ein Anschlusselement 22, welches den Verbindungsanschluss 3 bildet. Das Anschlusselement 22 weist einen Flansch 23 auf. Über diesen kann das Anschlusselement 22 mit der flexiblen Wandung des Stützelements, zum Beispiel durch Schweißen, verbunden werden. Dies ist in den Figuren nicht dargestellt. Das Anschlusselement 22 ist in den Figuren 5a - c genauer dargestellt. Zu dem Anschlusselement 22 gehört ein Einsatz 24. Der Einsatz 24, der in den Figuren 6a - d näher dargestellt ist, kann zum Beispiel durch Eingießen fest mit dem in den Figuren 5a - 5c dargestellten Anschlusselement 22 verbunden sein. In dem Einsatz 24 ist ein Innengewinde 25 angeordnet. Der Stutzen 9 kann mit seinem Außengewinde 19 in das Innengewinde 25 eingeschraubt werden (vgl. Figur 4c).

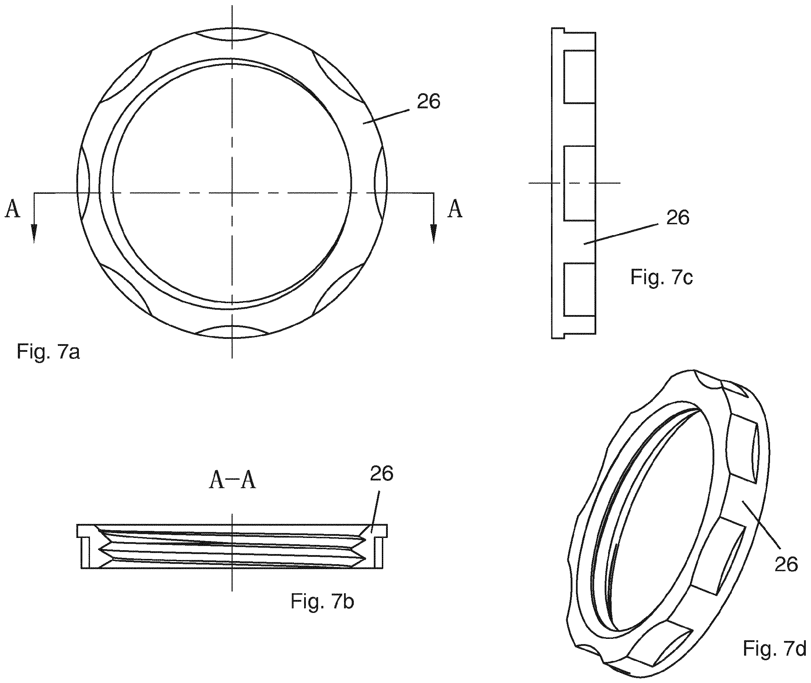

Weiterhin zeigt Figur 3b ein Klemmelement 26, das mit dem Anschlusselement 22 verschraubt werden kann. Auf diese Weise kann insbesondere bei einer mehrlagigen Ausgestaltung des Stützelements eine der Lagen klemmend mit dem Anschlusselement 22 verbunden werden. Das Klemmelement ist in den Figuren 7a bis 7d näher dargestellt.

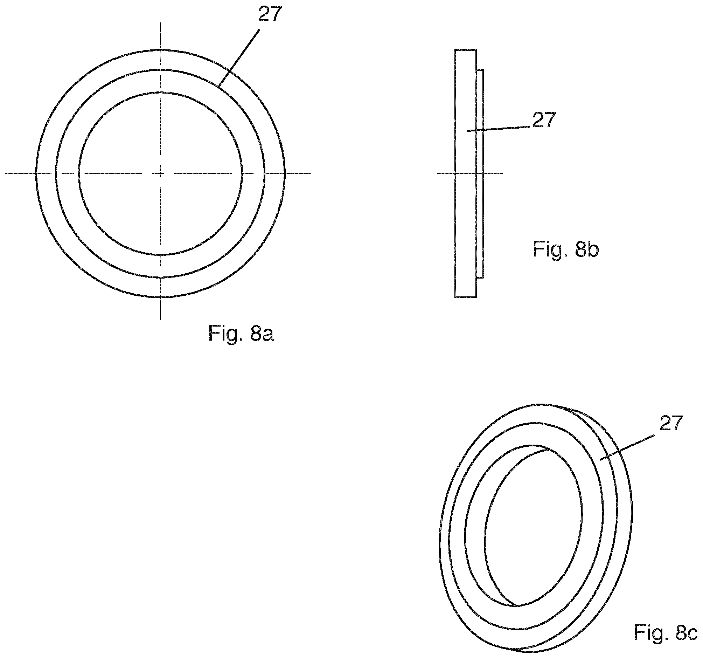

In Figur 3b ist weiterhin eine erste Dichtung 27 dargestellt, die das erste Verbindungsteil 6 gegenüber dem Anschlusselement 22 und damit gegenüber dem Verbindungsanschluss 3 abdichtet. Das erste Verbindungsteil 6 weist hierfür eine nutförmige Aufnahme 28 auf (vgl. Fig. 4c). Die erste Dichtung 27 ist in den Figuren 8a - c genauer dargestellt.

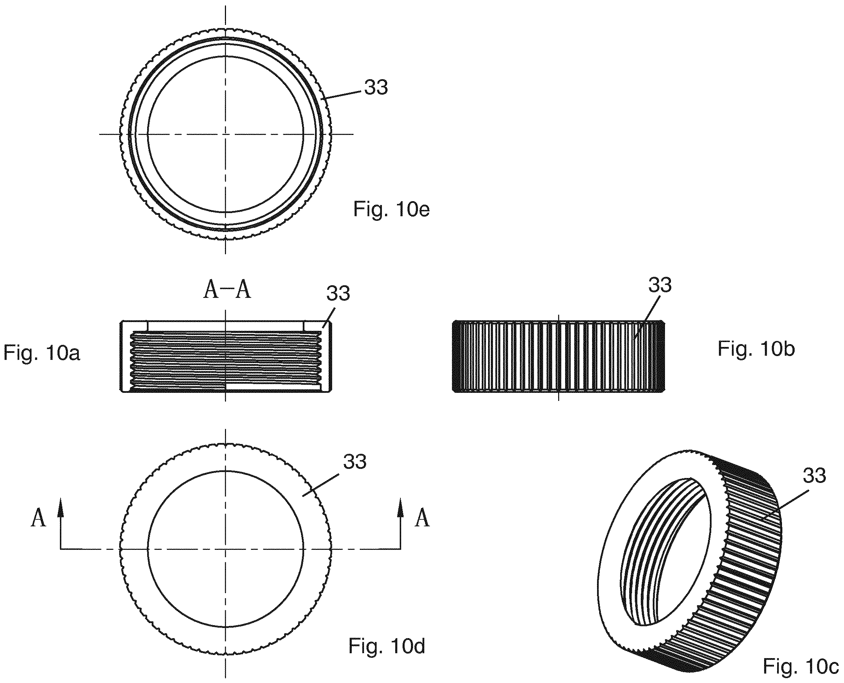

Figur 3c zeigt in einer Explosionsdarstellung die Elemente des zweiten Verbindungsteils 7. Dieses umfasst einen Grundkörper 30, an dem ein Stutzen 31 angeordnet ist. An der Außenseite des Stutzens 31 sind Verbindungsmittel 32 ausgebildet, die ein Gewinde umfassen. Der Grundkörper 30 hat einen größeren Außendurchmesser als der Stutzen 31. Weiterhin sind Verbindungsmittel zur Verbindung mit dem ersten Verbindungsteil 6 vorgesehen. Diese umfassen im dargestellten Ausführungsbeispiel eine Mutter 33 (vgl. auch Fig. 10a-e). Die Mutter 33 weist ein Innengewinde auf, das mit den Verbindungmitteln 21 am Grundkörper 8 des ersten Verbindungsmittels verschraubt werden kann. Die Mutter 33 verbindet dann den Grundkörper 8 mit dem Grundkörper 30. Dies ist auch in Figur 4c gut zu erkennen.

Dargestellt in Figur 3c ist weiterhin eine zweite Dichtung 34, welche das zweite Verbindungsteil 7 gegenüber dem zweiten Verbindungsanschluss abdichtet. Die zweite Dichtung 34 ist identisch wie die erste Dichtung 27 ausgebildet (vgl. auch Darstellungen in den Figuren 8a - c).

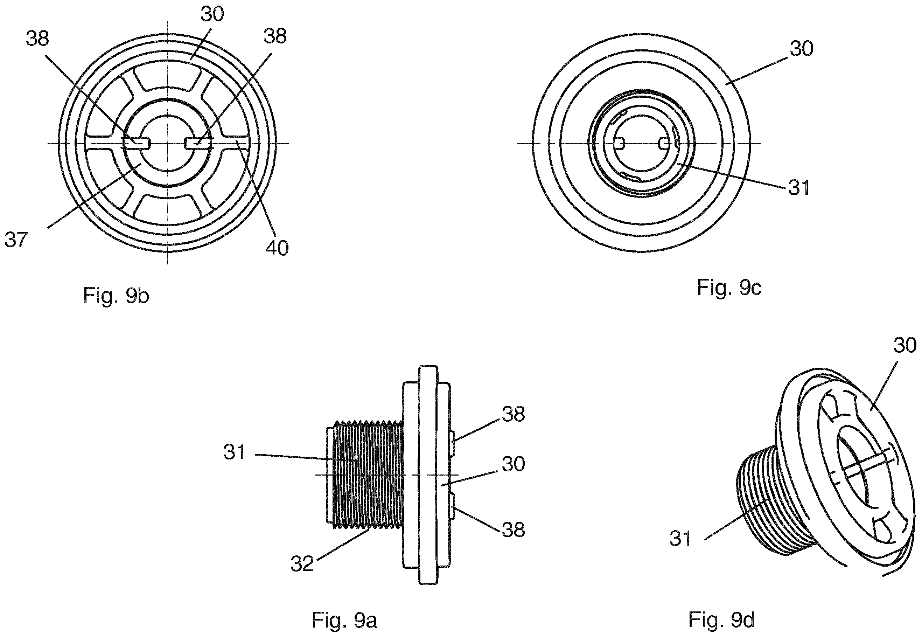

Das zweite Verbindungsteil 7 kann eine dritte Dichtung aufweisen, die das erste Verbindungsteil 6 gegenüber dem zweiten Verbindungsteil 7 abdichtet. Das zweite Verbindungsteil 7, welches in den Figuren 9a bis 9d näher dargestellt ist, weist ein Betätigungselement 37 auf, das den Ventilkörper 11 aus einer geschlossenen Stellung in eine geöffnete Stellung bewegt, wenn das zweite Verbindungsteil 7 an dem ersten Verbindungsteil 6 angeschlossen ist. Das Betätigungselement 37 umfasst vorstehende Nocken 38, die an dem zweiten Grundkörper 30 ausgebildet sind. Die dargestellte Ausführungsform weist zwei Nocken auf, die insbesondere in den Figuren 9a und 9b gut zu erkennen sind.

Figur 3c zeigt weiterhin ein Anschlusselement 22 und einen Einsatz 24 mit einem Klemmelement 26. Diese sind identisch wie die entsprechenden zuvor im Zusammenhang mit Figur 3b beschriebenen Elemente ausgebildet. Hierauf wird verwiesen.

Figur 3a zeigt die Verbindungsvorrichtung 5 zusammen mit den Anschlusselementen 22, wobei das erste Verbindungsteil 6 von dem zweiten Verbindungsteil 7 getrennt ist. Wenn das erste und das zweite Verbindungsteil 6, 7 getrennt sind, kann das erste Verbindungsteil 6 mit dem Stutzen 9 besonders einfach in den Verbindunganschluss 3 eingeschraubt werden. Genauso kann das zweite Verbindungsteil 7 mit dem Stutzen 31 in den Verbindungsanschluss 3' eingeschraubt werden. In dem ersten und zweiten Verbindungsteil 6,7 sind jeweils Vorsprünge 40 ausgebildet, die mit einem Werkzeug ergriffen werden können, um das jeweilige Verbindungsteil 6,7 festzuschrauben oder zu lösen. Die Vorsprünge 40 sind dabei als Rippen ausgebildet, die in radialer Richtung angeordnet sind.

Anschließend kann das erste Verbindungsteil 6 mit dem zweiten Verbindungsteil 7 verbunden werden, indem die Mutter 33 mit dem Grundkörper 8 verschraubt wird. Der verbundene Zustand ist in den Figuren 4a - d deutlich dargestellt. Insbesondere ist hier gut zu erkennen, wie die Nocken 38 den Ventilkörper 11 in die geöffnete Position bewegen.

## Patentansprüche

1. Schutzvorrichtung mit einer Membran und einer Stützvorrichtung (1) für die Membran, wobei die Stützvorrichtung (1) ein aufblasbares erstes Stützelement (2) mit einer flexiblen Wandung, welche eine erste Druckkammer bildet, umfasst, wobei das erste Stützelement (2) einen ersten Verbindungsanschluss (3) mit einer ersten Verbindungsöffnung aufweist, wobei die Stützvorrichtung (1) ein aufblasbares zweites Stützelement (2') mit einer flexiblen Wandung, welche eine zweite Druckkammer bildet, aufweist, wobei das zweite Stützelement (2') einen zweiten Verbindungsanschluss (3') mit einer zweiten Verbindungsöffnung aufweist, wobei eine Verbindungsvorrichtung (5) zur Verbindung des ersten Verbindungsanschlusses (3) mit dem zweiten Verbindungsanschluss (3') vorgesehen ist, wobei die Verbindungsvorrichtung (5) ein erstes Verbindungsteil (6) zur Verbindung mit dem ersten Verbindungsanschluss (3) und ein zweites Verbindungsteil (7) zur Verbindung mit dem zweiten Verbindungsanschluss (3') aufweist, wobei Mittel vorgesehen sind, um das erste und zweite Verbindungsteil lösbar miteinander zu verbinden, wobei die Verbindungsvorrichtung (5) ein Ventil (10) aufweist, das die erste Verbindungsöffnung absperrt, wobei das Ventil (10) einen beweglichen Ventilkörper (11) und einen Ventilsitz (13) aufweist, **dadurch gekennzeichnet, dass** das Ventil (10) eine Feder (12) aufweist, welche den Ventilkörper (11) gegen den Ventilsitz (13) drückt, und dass das zweite Verbindungsteil (7) ein Betätigungselement (37) aufweist, welches so angeordnet ist, dass es den Ventilkörper (11) aus einer geschlossenen Stellung in eine geöffnete Stellung bewegt, wenn das zweite Verbindungsteil (7) an dem ersten Verbindungsteil (6) angeschlossen ist, um somit eine Verbindung der ersten Druckkammer mit der zweiten Druckkammer zu ermöglichen.

2. Schutzvorrichtung nach Anspruch 1, **dadurch gekennzeichnet, dass** der bewegliche Ventilkörper (11) einen Dichtelement (15) zur Anlage an dem Ventilsitz (13) aufweist.

3. Schutzvorrichtung nach Anspruch 1 oder 2, **dadurch gekennzeichnet, dass** das erste Verbindungsteil (6) einen Stutzen (9) aufweist, in dem der Ventilkörper (11) zumindest teilweise angeordnet ist.

4. Schutzvorrichtung nach Anspruch 3, **dadurch gekennzeichnet, dass** in dem Stutzen (9) ein Anschlag (20) für die Feder (12) angeordnet ist.

5. Schutzvorrichtung nach einem der Ansprüche 3 oder 4, **dadurch gekennzeichnet, dass** das erste Verbindungsteil (6) einen Grundkörper (8) aufweist, an dem der Stutzen (9) angeordnet ist.

6. Schutzvorrichtung nach einem der Ansprüche 1 bis 5, **dadurch gekennzeichnet, dass** das zweite Verbindungsteil (7) einen Stutzen (31) aufweist.

7. Schutzvorrichtung nach Anspruch 6, **dadurch gekennzeichnet, dass** das zweite Verbindungsteil (7) einen Grundkörper (30) aufweist, an dem der Stutzen (31) angeordnet ist.

8. Schutzvorrichtung nach einem der Ansprüche 1 bis 7, **dadurch gekennzeichnet, dass** eine erste Dichtung (27) vorgesehen ist, welche das erste Verbindungsteil (6) gegenüber dem ersten Verbindungsanschluss (3) abdichtet.

9. Schutzvorrichtung nach einem der Ansprüche 1 bis 8, **dadurch gekennzeichnet, dass** eine zweite Dichtung (34) vorgesehen ist, welche das zweite Verbindungsteil (7) gegenüber dem zweiten Verbindungsanschluss (3') abdichtet.

10. Schutzvorrichtung nach einem der Ansprüche 1 bis 9, **dadurch gekennzeichnet, dass** eine dritte Dichtung vorgesehen ist, welche den Grundkörper (8) des ersten Verbindungsteils (6) gegenüber dem Grundkörper (30) des zweiten Verbindungsteils (7) abdichtet.

11. Schutzvorrichtung nach einem der Ansprüche 1 bis 10, **dadurch gekennzeichnet, dass** das erste Stützelement (2) und/oder das zweite Stützelement (2') jeweils ein Anschlusselement (22) aufweist, welches den ersten bzw. zweiten Verbindungsanschluss bildet.

## Claims

1. Protective device comprising a membrane and a support device (1) for the membrane, the support device (1) comprising an inflatable first support element (2) with a flexible wall which forms a first pressure chamber, the first support element (2) having a first connection port (3) with a first connecting opening, the support device (1) having an inflatable second support element (2') with a flexible wall which forms a second pressure chamber, the second support element (2') having a second connection port (3') with a second connecting opening, wherein a connecting device (5) is provided for connecting the first connection port (3) to the second connection port (3'), the connecting device (5) having a first connecting part (6) for connection to the first connection port (3) and a second connecting part (7) for connection to the second connection port (3'), wherein means are provided for detachably interconnecting the first and the second connecting part, the connecting device (5) having a valve (10) which blocks the first connecting opening, the valve (10) having a movable valve body (11) and a valve seat (13), **characterised in that** the valve (10) has a spring (12) which presses the valve body (11) against the valve seat (13) and **in that** the second connecting part (7) has an actuation element (37) which is arranged in such a way that it moves the valve body (11) from a closed position into an open position when the second connecting part (7) is connected to the first connecting part (6), so as to make it possible to connect the first pressure chamber to the second pressure chamber.

2. Protective device according to claim 1, **characterised in that** the movable valve body (11) has a sealing element (15) for application to the valve seat (13).

3. Protective device according to either claim 1 or claim 2, **characterised in that** the first connecting part (6) has a socket (9) in which the valve body (11) is at least partially arranged.

4. Protective device according to claim 3, **characterised in that** a stop (20) for the spring (12) is arranged in the socket (9).

5. Protective device according to either claim 3 or claim 4, **characterised in that** the first connecting part (6) has a base body (8) on which the socket (9) is arranged.

6. Protective device according to any of claims 1 to 5, **characterised in that** the second connecting part (7) has a socket (31).

7. Protective device according to claim 6, **characterised in that** the second connecting part (7) has a base body (30) on which the socket (31) is arranged.

8. Protective device according to any of claims 1 to 7, **characterised in that** a first seal (27) is provided which seals off the first connecting part (6) from the first connection port (3).

9. Protective device according to any of claims 1 to 8, **characterised in that** a second seal (34) is provided which seals off the second connecting part (7) from the second connection port (3').

10. Protective device according to any of claims 1 to 9, **characterised in that** a third seal is provided which seals off the base body (8) of the first connecting part (6) from the base body (30) of the second connecting part (7).

11. Protective device according to any of claims 1 to 10, **characterised in that** the first support element (2) and/or the second support element (2') each have a connection port (22) which forms the first or second connection port respectively.

## Revendications

1. Dispositif de protection comportant une membrane et un dispositif de support (1) pour la membrane, le dispositif de support (1) comprenant un premier élément de support gonflable (2) avec une paroi flexible formant une première chambre de pression, le premier élément de support (2) présentant un premier raccordement de liaison (3) avec une première ouverture de liaison, le dispositif de support (1) présentant un deuxième élément de support (2') avec une paroi flexible formant une deuxième chambre de pression, le deuxième élément de support (2') présentant un deuxième raccordement de liaison (3') avec une deuxième ouverture de liaison, un dispositif de liaison (5) étant prévu pour relier le premier raccordement de liaison (3) au deuxième raccordement de liaison (3'), le dispositif de liaison (5) présentant une première partie de liaison (6) pour la liaison avec le premier raccordement de liaison (3) et une deuxième partie de liaison (7) pour la liaison avec le deuxième raccordement de liaison (3'), des moyens étant prévus pour relier entre elles de manière amovible les première et deuxième parties de liaison, le dispositif de liaison (5) présentant une soupape (10) qui ferme la première ouverture de liaison, la soupape (10) présentant un corps de soupape mobile (11) et un siège de soupape (13), **caractérisé en ce que** la soupape (10) présente un ressort (12) qui appuie le corps de soupape (11) contre le siège de soupape (13), et que la deuxième partie de liaison (7) présente un élément d'actionnement (37) qui est disposé de telle sorte qu'il déplace le corps de soupape (11) d'une position fermée dans une position ouverte lorsque la deuxième partie de liaison (7) est raccordée à la première partie de liaison (6) afin de permettre une liaison entre la première chambre de pression et la deuxième chambre de pression.

2. Dispositif de protection selon la revendication 1, **caractérisé en ce que** le corps de soupape mobile (11) présente un élément d'étanchéité (15) destiné à s'appuyer contre le siège de soupape (13).

3. Dispositif de protection selon la revendication 1 ou 2, **caractérisé en ce que** la première partie de liaison (6) présente un manchon (9) dans lequel le corps de soupape (11) est disposé au moins partiellement.

4. Dispositif de protection selon la revendication 3, **caractérisé en ce qu'**une butée (20) pour le ressort (12) est disposée dans le manchon (9).

5. Dispositif de protection selon l'une des revendications 3 ou 4, **caractérisé en ce que** la première partie de liaison (6) présente un corps de base (8) sur lequel le manchon (9) est disposé.

6. Dispositif de protection selon l'une des revendications 1 à 5, **caractérisé en ce que** la deuxième partie de liaison (7) présente un manchon (31).

7. Dispositif de protection selon la revendication 6, **caractérisé en ce que** la deuxième partie de liaison (7) présente un corps de base (30) sur lequel le manchon (31) est disposé.

8. Dispositif de protection selon l'une des revendications 1 à 7, **caractérisé en ce qu'**il est prévu un premier joint d'étanchéité (27) qui rend la première partie de liaison (6) étanche par rapport au premier raccordement de liaison (3).

9. Dispositif de protection selon l'une des revendications 1 à 8, **caractérisé en ce qu'**il est prévu un deuxième joint d'étanchéité (34) qui rend la deuxième partie de liaison (7) étanche par rapport au deuxième raccordement de liaison (3').

10. Dispositif de protection selon l'une des revendications 1 à 9, **caractérisé en ce qu'**il est prévu un troisième joint d'étanchéité qui rend le corps de base (8) de la première partie de liaison (6) étanche par rapport au corps de base (30) de la deuxième partie de liaison (7).

11. Dispositif de protection selon l'une des revendications 1 à 10, **caractérisé en ce que** le premier élément de support (2) et/ou le deuxième élément de support (2') présentent chacun un élément de raccordement (22) qui forme le premier, respectivement le deuxième, raccordement de liaison.
